# EUROPÄISCHE PATENTSCHRIFT

(11) **EP 3 330 028 B1**
(45) Veröffentlichungstag und Bekanntmachung des Hinweises auf die Patenterteilung: **05.05.2021**
(21) Anmeldenummer: 17194926.6
(22) Anmeldetag: 05.10.2017
(51) Int. Cl.: B23D 59/00, B24B 55/06

(54) **WERKZEUGMASCHINE MIT STAUBSAMMELVORRICHTUNG**
MACHINE TOOL WITH DUST COLLECTING DEVICE
MACHINE-OUTIL POURVUE DE DISPOSITIF DE COLLECTE DE POUSSIÈRE

(30) Priorität: 30.11.2016 DE 102016123179
(43) Veröffentlichungstag der Anmeldung: 06.06.2018
(73) Patentinhaber: Metabowerke GmbH, 72622 Nürtingen (DE)
(72) Erfinder: Scherl, Thomas, 89160 Dornstadt-Tomerdingen (DE)
(74) Vertreter: Markfort, Iris-Anne Lucie

(56) Entgegenhaltungen:
- EP-A1- 1 614 511
- EP-A1- 1 625 908
- EP-A1- 3 064 301
- CN-A- 101 096 095
- DE-U1-202007 008 731
- DE-U1-202013 101 173
- DE-U1-202014 000 507
- US-A1- 2003 213 482
- US-A1- 2016 318 109

## Beschreibung

Die Erfindung betrifft eine Werkzeugmaschine mit einem im Wesentlichen scheibenförmigen Bearbeitungswerkzeug und einer Staubsammelvorrichtung gemäß dem Oberbegriff des Anspruchs 1. EP1810770 B1 offenbart eine solche Werkzeugmaschine gemäß dem Oberbegriff des Anspruchs 1.

Aus dem Stand der Technik ist bereits bekannt, insbesondere eine Säge mit einer Staubsammelvorrichtung zu versehen. Entscheidend bei der Bearbeitung mit spanenden Handwerkzeugmaschinen, wie beispielsweise Sägen oder Schleifmaschinen, ist es, die bei der Bearbeitung anfallenden Staub- und Spanpartikel möglichst effizient abzusaugen, um auf diese Weise die Belastung des Anwenders und die Verschmutzung bei einer Bearbeitung in geschlossenen Räumen gering zu halten.

Eine bekannte Möglichkeit hierfür besteht darin, an die Handwerkzeugmaschine zusätzlich einen Staubsauger anzuschließen, der eine effiziente Absaugung ermöglicht. Hierzu kann an der entsprechenden Handwerkzeugmaschine, beispielsweise an der Abdeckung für das Bearbeitungswerkzeug, ein Anschlussstutzen vorgesehen sein. Der Staubsauger erzeugt in seinem Betrieb aktiv einen Unterdruck innerhalb der Abdeckung und saugt die Staub- und Spanartikel enthaltende Luft aus dem Innenraum der Abdeckung ab. Allerdings muss bei dieser Lösung stets ein zusätzliches Gerät, nämlich ein Staubsauger, bereitgestellt werden, der zudem seinerseits mit Strom betrieben werden muss. Somit ist diese Lösung vergleichsweise kostenintensiv und kann die Handhabung der Elektrowerkzeugmaschine beeinträchtigen. Selbst bei bekannten Lösungen, bei denen ein akkubetriebener Staubsauger eingesetzt werden kann, verbleibt der für die Handhabung beider Geräte notwendige Mehraufwand und der im Gebrauch störende Absaugschlauch, der den Staubsauger mit der Handwerkzeugmaschine verbindet.

Eine weitere bekannte Lösung stellt die passive Staubabscheidung dar, bei der nicht ein zusätzliches Gerät aktiv die Staub- und Spanpartikel enthaltende Luft absaugt, sondern die Staub- und Spanartikel enthaltende Luft über eine passiv wirkende Staubfang- oder Staubsammelvorrichtung geführt wird, welche die Staub- und Spanartikel von der Luft abscheidet und in einem Sammelbehälter auffängt. Eine solche passive Staubabscheidung kann selbstverständlich auch mit einer aktiven Staubabsaugung kombiniert werden. So ist beispielsweise aus der europäischen Patentanmeldung EP 0 556 626 A1 eine Bodenschleifmaschine mit einer Staubabsaugung bekannt, bei der zum Entfernen des Staubs aus der abgesaugten Staubluft und zum Sammeln des Staubs eine Vorrichtung im Strömungsweg der Staubluft angeordnet ist. Eine Filtereinrichtung aus dem Staub zurückhaltenden luftdurchlässigen Material filtert den Staub aus der Luft, der dann unter seiner Schwerkraft in ein zugeordnetes Auffangbehältnis fällt.

Als eine spezifische Staubsammelvorrichtung ist aus der EP 1 810 770 B1 eine Zykloneinheit bekannt, die die Strömung einer verbliebenen Menge von Schneidespänen, die nicht von einem ersten Staubsammler bereits abgeschieden wurden, zusammen mit der Trägerluft aufnimmt. Die Zykloneinheit umfasst ein Zyklongehäuse, ein Schneidespan-Ableitungsrohr und ein Luft-Ableitungsrohr, wobei das Zyklongehäuse eine Innenwand aufweist und zum Verursachen einer Zirkulation der verbliebenen Schneidespäne zusammen mit der Trägerluft entlang des Umfangs der Innenwand angeordnet und konstruiert ist, während abgetrennte verbliebende Schneidspäne mindestens teilweise aufgrund der Schwerkraft nach unten sinken und wobei nach Trennung die Trägerluft aus dem Zyklongehäuse über das Luft-Ableitungsrohr abgeleitet wird. Die abgetrennten verbliebenen Schneidespäne werden aus dem Zyklongehäuse über das Schneidespan-Ableitungsrohr abgeleitet und in einer nachgeschalteten Staubsammelkammer gesammelt.

Weiterhin beschreibt auch die chinesische Anmeldung CN 101096095 A die Verwendung einer Elektrohandwerkzeugmaschine in Kombination mit einem Zyklonabscheider.

Die US2003/213482 A1 wie auch die EP 1 614 511 A1 beschreiben beide Werkzeugmaschinen mit rotierbaren Sägeblättern, bei denen Späne mittels Umlenkelementen umgeleitet bzw. abgefangen und in einer Auffangkammer gehalten werden können.

Ein Zyklon bzw. auch Fliehkraftabscheider oder Zyklonabscheider genannt, umfasst in der Regel vier wesentliche Bestandteile, nämlich einen Eintritt oder Einlass, einen Austritt bzw. Auslass für Staub- und Spanpartikel, einen Austritt für die gereinigte Luft sowie einen Kegelabschnitt, der die für die Wirkweise des Zyklons wesentliche Innenwandverjüngung bereitstellt. Im Bereich des Einlasses bzw. Eintritts ist der Zyklon im Wesentlichen zylinderförmig ausgebildet und die zu filternde Luft wird im Wesentlichen tangential eingeblasen. Durch die Verjüngung des sich anschließenden Kegels nimmt die Drehgeschwindigkeit der eingeblasenen Luft in Richtung der Längsachse, entlang derer sich der Kegel erstreckt und in deren Richtung er sich verjüngt, dermaßen zu, dass die Partikel durch die Fliehkraft an die Kegelinnenwand geschleudert und somit abgebremst werden, so dass sie sich aus der Luftströmung lösen und schwerkraftbedingt nach unten fallen. Gegebenenfalls können im Inneren des Zyklons zusätzlich schneckenförmig an der Innenwand angebrachte Leitbleche vorgesehen sein.

Obgleich die Nutzung eines Zyklonabscheiders sich in der Praxis bereits bewährt hat, ist gerade aufgrund einer gewünschten passiven Abscheidung ohne das zusätzliche Vorsehen einer aktiven Staubabsaugung die Effizienz des Zyklonabscheiders oftmals nicht ausreichend. Insbesondere bei Werkzeugmaschinen, bei denen die Abdeckung Teil des Maschinengehäuses ist oder zumindest mit dem Maschinengehäuse zusammen einen Bearbeitungsraum einschließt, sammelt sich innerhalb dieses Bearbeitungsraums ebenfalls Staub- und Spanpartikel enthaltende Luft, die durch das Bearbeitungswerkzeug verwirbelt wird und dadurch immer mehr Spanpartikel aufnimmt. Hierdurch kommt es in der Praxis noch immer zu einer nennenswerten Belastung des Benutzers, da selbstverständlich auch derartige Staubluft aus dem Bearbeitungsraum austritt und die vorstehend genannten Probleme mit sich bringt.

Daher besteht eine Aufgabe der vorliegenden Erfindung darin, die bereits bekannten Systeme weiter zu verbessern, um eine noch effizientere Staubabscheidung zu ermöglichen. Diese Aufgabe wird durch die nachfolgend beschriebene Erfindung mit den Merkmalen des unabhängigen Anspruchs 1 gelöst. Demgemäß umfasst die erfindungsgemäße Werkzeugmaschine eine Antriebseinheit zum Antrieb eines scheibenförmigen Bearbeitungswerkzeugs, ein Maschinengehäuse, das zumindest teilweise die Antriebseinheit aufzunehmen vermag, eine Abdeckung für das Bearbeitungswerkzeug, sowie eine Staubsammelvorrichtung, die mit der Abdeckung verbunden und zum Sammeln und Abführen von Staub- und Spanpartikeln vorgesehen ist, wobei die Staubsammelvorrichtung einen Einlass, wenigstens einen Auslass sowie eine Zykloneinheit zur Abscheidung der Staub- und Spanpartikel aufweist. Darüber hinaus ist erfindungsgemäß im Bereich des Bearbeitungswerkzeugs an der Abdeckung wenigstens ein Spanleitelement vorgesehen, das zumindest abschnittsweise an beiden Stirnflächen des scheibenförmigen Bearbeitungswerkzeugs anzuliegen und eine Umleitung der von dem Bearbeitungswerkzeug abgegebenen Staub- und Spanpartikel in Richtung zum Einlass der Staubsammelvorrichtung zur bewirken vermag.

Kurz zusammengefasst wird also zusätzlich zu der Zykloneinheit zur Abscheidung der Staub- und Spanpartikel ein Spanleitelement vorgesehen, das die von dem Bearbeitungswerkzeug aufgewirbelten und heraufgeschleuderten Späne abfängt und diese in Richtung zum Einlass der Staubsammelvorrichtung umleitet. Hierdurch wird die vorstehend angesprochene unerwünschte Anreicherung der Luft im Bearbeitungsraum, welche von der Abdeckung für das Bearbeitungswerkzeug begrenzt wird, verringert und die damit verbundenen Nachteile somit weitestgehend vermieden.

Zudem werden durch die Ausgestaltung der Zykloneinheit die Späne nur umgelenkt und geringfügig abgebremst, so dass diese nicht schon im Bereich des Bearbeitungswerkzeug herabfallen und den Arbeitsbereich des Bearbeitungswerkzeugs füllen.

Es sei angemerkt, dass die Abdeckung für das Bearbeitungswerkzeug Teil des Maschinengehäuses sein kann oder zusätzlich an diesem angebracht sein kann. Demgemäß kann die Abdeckung separat von dem Maschinengehäuse ausgebildet oder einteilig mit diesem sein. Weiterhin bezeichnet die Abdeckung für das Bearbeitungswerkzeug alle erdenklichen dieses zumindest teilweise umgebende oder abdeckende Bauteile, wie beispielsweise einen Sägekasten, Spänekasten eine Schutzhaube oder dergleichen.

Je nach Ausgestaltung der Werkzeugmaschine kann das Bearbeitungswerkzeug für eine Einstellbarkeit der Bearbeitungshöhe relativ zu der Abdeckung verstellbar ausgestaltet sein, wobei dann das Spanleitelement zumindest in einer minimalen Bearbeitungshöhe des Bearbeitungswerkzeugs zumindest abschnittsweise an beiden Stirnflächen des scheibenförmigen Bearbeitungswerkzeugs anzuliegen und eine Umleitung der von dem Bearbeitungswerkzeug abgegebenen Staub- und Spanpartikel in Richtung zum Einlass der Staubsammelvorrichtung zu bewirken vermag.

Weiterhin kann vorgesehen sein, dass die Zykloneinheit einen Gleichstromzyklon oder einen Gegenstromzyklon umfasst. Bei einem Gegenstromzyklon wird die Rohluft (Luft mit Staub- und Schmutzpartikeln bzw. Spanpartikeln) tangential in den Zyklon eingeleitet. Aufgrund der Zentrifugalkräfte werden die Teilchen abgebremst und wandern schwerkraftbedingt nach unten zum Ausgang der Schmutzpartikel. Die Reinluft (Luft nach Abscheidung der Staub- und Spanpartikel) wird bei einem Gegenstromzyklon über ein Tauchrohr nach oben wieder ausgelassen. Alternativ zu einem solchen Gegenstromzyklon ist jedoch auch die Nutzung eines Gleichstromzyklons denkbar.

Weiterhin kann vorgesehen sein, dass die Staubsammelvorrichtung wenigstens einen Sammelbehälter, insbesondere einen Staubsack umfasst, der an dem wenigstens einen Auslass befestigbar ist. Dabei spielt es keine Rolle, ob der Sammelbehälter luftdurchlässig ist oder nicht, da in Abhängigkeit von der Ausgestaltung der Zykloneinheit die Reinluft entweder über den gleichen Ausgang abgegeben wird oder über einen separaten Luftauslass. Für den Fall, dass ein Gleichstromzyklon verwendet werden soll, kann der Staubsack insbesondere aus einem luftdurchlässigen Material hergestellt sein, wie beispielsweise Papier, Vlies oder dergleichen. Zudem kann aufgrund der erfindungsgemäßen Ausgestaltung auch ganz auf einen Sammelbehälter verzichtet werden, beispielsweise wenn die Werkzeugmaschine im Außenbereich zur Anwendung kommt. Dabei zeigt sich wiederum der erfindungsgemäße Vorteil gegenüber dem Stand der Technik, dass der Arbeitsbereich bei der erfindungsgemäßen Werkzeugmaschine frei von Spänen gehalten werden kann, die in einem hinteren Bereich der Werkzeugmaschine über das Spanleitelement umgeleitet und über die Staubsammelvorrichtung gesammelt ausgegeben werden. Ein weiterer aus dem Stand der Technik bekannter Nachteil, nämlich das Verstopfen des Arbeitsbereichs und des Schwenkrahmens, wird folglich deutlich verringert.

Es kann weiter vorgesehen sein, dass wenigstens die Zykloneinheit mittels einer Justageeinheit relativ zu der Abdeckung verstellbar angebracht ist. Eine solche Ausgestaltungsvariante ist immer dann empfehlenswert, wenn die Abdeckung selbst verstellbar ist und beispielsweise in unterschiedliche Betriebspositionen verschwenkt werden kann. Eine solche Verschwenkbarkeit kann beispielsweise bei Gehrungssägen vorgesehen sein. Mit Hilfe der Justageeinheit kann dann die Zykloneinheit oder die gesamte Staubsammelvorrichtung in eine Position gebracht werden, die für die Effizienz der Zykloneinheit optimal ist. In der Regel ist dies eine Position und Ausrichtung, bei der die Längsachse, entlang der sich der Kegelabschnitt des Zyklons erstreckt, vertikal ausgerichtet ist.

Insbesondere kann vorgesehen sein, dass die Justageeinheit einen Freilauf umfasst, der bewirkt, dass wenigstens die Zykloneinheit schwerkraftbedingt im Wesentlichen in einer vorgegebenen Ausrichtung verbleibt, selbst wenn die verbundene Abdeckung ihre Ausrichtung verändert, insbesondere verschwenkt wird. So kann beispielsweise der Freilauf einen Anschlussstutzen umfassen, an dem die Zykloneinheit frei drehbar angebracht ist. Alternativ kann auch die Zykloneinheit im Inneren eines separaten, undrehbar an der Abdeckung gehaltenen Gehäuses entsprechend drehbar ausgestaltet sein, dass eine vertikale Ausrichtung auch ohne Einwirken durch den Anwender schwerkraftbedingt ermöglicht wird.

Weiterhin kann vorgesehen sein, dass das Spanleitelement aus einem Elastomer- oder Kunststoffmaterial oder zumindest einem Material hergestellt ist, welches mit dem Bearbeitungswerkzeug in Kontakt treten darf, ohne dass dies ein Sicherheitsrisiko für den Anwender darstellt. Denkbare Materialien sind Gummi, Weichkunststoffe und dergleichen.

Eine Besonderheit der vorliegenden Erfindung, unabhängig von der spezifischen Materialwahl und der Ausgestaltung der Zykloneinheit besteht darin, dass das Spanleitelement beidseitig an den Stirnflächen des Bearbeitungswerkzeugs in Anlage an dieses gebracht werden kann und somit das Bearbeitungswerkzeug quasi seitlich umschließt. Auf diese Weise kann ein Aufwirbeln und Heraufschleudern der Späne bzw. Staubpartikel im unteren Absaugbereich des Bearbeitungswerkzeugs effizient verhindert werden und die Staub- und Spanpartikel können direkt zum Einlass der Staubsammelvorrichtung tangential ausgeleitet werden. Hierdurch wird die Effizienz der Staubabscheidung signifikant verbessert. Das Spanleitelement leitet die Flugbahn der von dem Bearbeitungswerkzeug heraufgeschleuderten Staub- und Spanpartikel entscheidend ab und bündelt diese im Bereich des gewünschten Einlasses der Staubsammelvorrichtung. Durch die beidseitige Kontaktierung des Bearbeitungswerkzeugs wird eine möglichst dichte Spanleitführung ermöglicht und dadurch die Spänestreuung innerhalb des Bearbeitungsraums minimiert.

Es kann weiter vorgesehen sein, dass das Spanleitelement kraftschlüssig, insbesondere über Klemmung, an der Abdeckung aufgenommen ist. Alternativ sind selbstverständlich auch andere Befestigungsmöglichkeiten denkbar, wie beispielsweise durch Formschluss oder Stoffschluss. Der Vorteil einer kraftschlüssigen Befestigung des Spanleitelements liegt insbesondere in der einfachen Austauschbarkeit des Spanleitelements, sobald dieses beschädigt ist.

Weiterhin kann vorgesehen sein, dass das Spanleitelement im Querschnitt betrachtet einen kurvenförmigen Verlauf, insbesondere in der Art einer S-Kurve, aufweist.

Alternative Ausgestaltungsvarianten sind je nach Anwendungsfall selbstverständlich ebenfalls denkbar. Dabei ist die Geometrie des Spanleitelements insbesondere von der Partikelgröße der anfallenden Spanpartikel und den sich innerhalb der Abdeckung einstellenden Luftgeschwindigkeiten abhängig.

Weiterhin kann vorgesehen sein, dass das Spanleitelement derart angeordnet ist, dass es im Falle einer verstellbaren Bearbeitungshöhe in der maximalen Bearbeitungshöhe des Bearbeitungswerkzeugs (das heißt bei einem maximal großen Abstand) den von dem sich drehende Bearbeitungswerkzeug im Betrieb beschriebenen Hüllkreis zumindest tangiert und in einer geringeren Bearbeitungshöhe (das heißt mit einem geringeren Abstand) zumindest abstandsweise an beiden Stirnflächen des Bearbeitungswerkzeugs anzuliegen vermag.

Weiterhin kann vorgesehen sein, dass die Werkzeugmaschine zusätzlich einen Lüfter zur Erzeugung eines Luftstroms in Richtung der Staubsammelvorrichtung aufweist. Insbesondere kann ein solcher Lüfter mit der Antriebswelle des Bearbeitungswerkzeugs verbunden und zusammen mit dieser angetrieben sein. Mit Hilfe eines solchen Lüfters können die Luftgeschwindigkeit und damit auch der Volumenstrom erhöht werden.

Insgesamt bietet die vorliegende Erfindung den großen Vorteil, dass bekannte Staubsammelkonzepte noch weiter verbessert werden. Hierdurch wird eine effizientere Staubabsaugung bzw. Staubabscheidung ermöglicht, ohne dass hierfür ein Staubsauger notwendig ist. Für den Anwender bedeutet dies deutlich mehr Flexibilität und geringere Kosten. Weiterhin wird auch sauberes Arbeiten in bewohnten Räumen ermöglicht. Der Anwender wird während der Bearbeitung schließlich kaum mehr Staub ausgesetzt, was besonders langfristig betrachtet einen großen Vorteil für seine Gesundheit bedeutet.

Weitere Merkmale der Erfindung sind in den Unteransprüchen und der nachfolgenden Figurenbeschreibung beschrieben.

Die vorliegende Erfindung wird nachfolgend unter Bezugnahme auf die beigefügten Figuren näher erläutert. Die Figuren zeigen schematisiert eine Ausführungsform der vorliegenden Erfindung, in der alle deren Merkmale in Kombination miteinander gezeigt sind. Selbstverständlich können diese jedoch auch losgelöst voneinander betrachtet und zu sinnvollen Unterkombinationen kombiniert werden, ohne dass ein Fachmann hierfür erfinderisch tätig werden müsste.

Die Figuren zeigen nachfolgend schematisch:
- Figur 1: eine teilgeschnittene Darstellung der erfindungsgemäßen Werkzeugmaschine, wobei die Schnittebene im Wesentlichen parallel zu den Stirnflächen des Bearbeitungswerkzeugs angeordnet ist;
- Figur 2A: eine Ansicht der erfindungsgemäßen Werkzeugmaschine gemäß Figur 1 von vorne;
- Figur 2B: eine Schnittansicht entlang der Schnittlinie B-B gemäß der Figur 2A; und
- Figur 3: eine isometrische Ansicht der erfindungsgemäßen Werkzeugmaschine der Figuren 1 bis 2B, wobei ein Teil der Abdeckung fehlt.

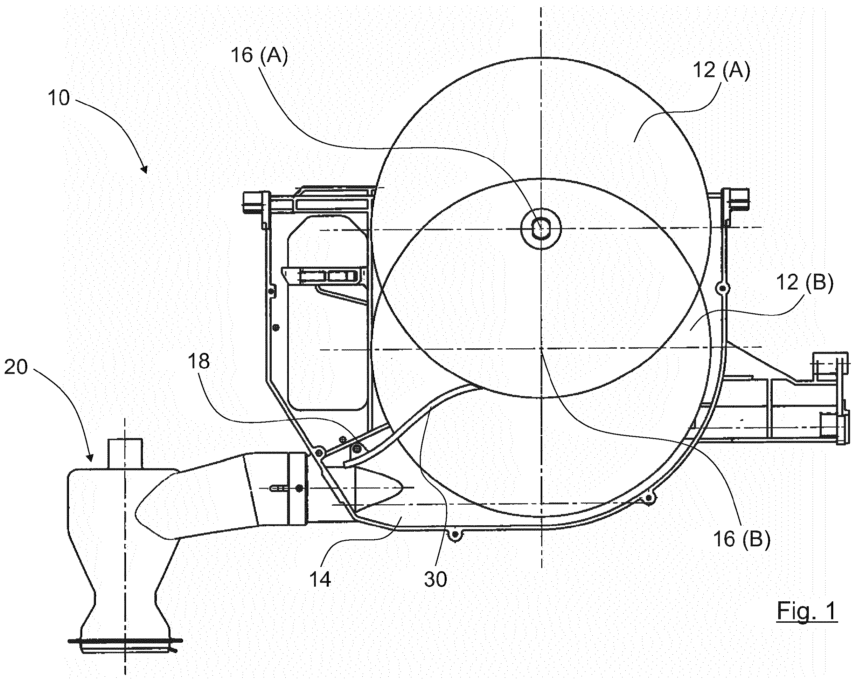

Figur 1 zeigt die erfindungsgemäße Handwerkzeugmaschine in schematisierter Darstellung, wobei diese allgemein mit dem Bezugszeichen 10 versehen ist.

Die erfindungsgemäße Werkzeugmaschine ist in der dargestellten Ausführungsform als Säge mit einem Bearbeitungswerkzeug 12 dargestellt, das durch ein im Wesentlichen kreisförmiges Sägeblatt gebildet wird. Selbstverständlich sind jedoch von der vorliegenden Erfindung, wie eingangs dargestellt, weitere Werkzeugmaschinen mit rotierenden Bearbeitungswerkzeugen zur spanenden Bearbeitung umfasst.

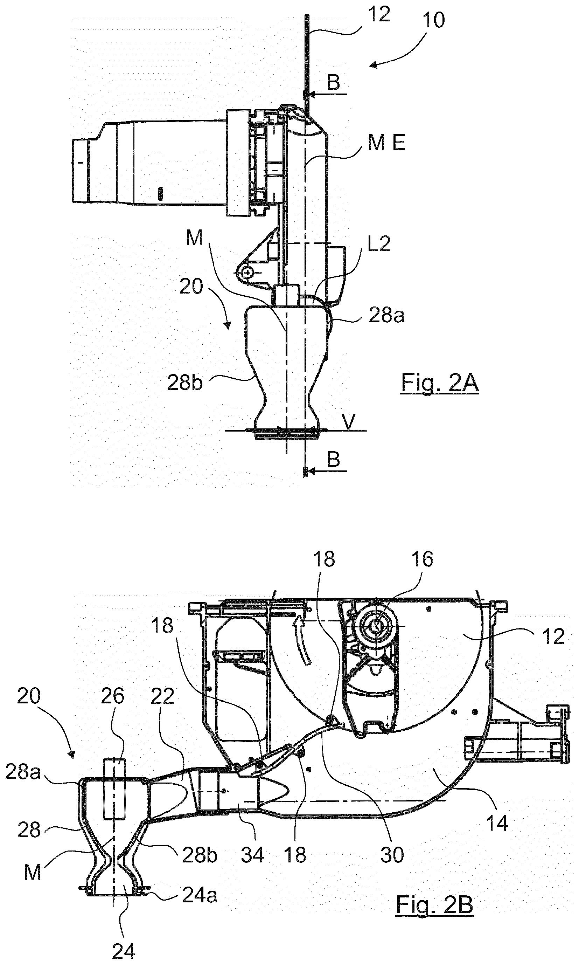

In der dargestellten Ausführungsform ist gezeigt, dass das Bearbeitungswerkzeug 12 sich in unterschiedlichen Positionen 12(A) und 12(B) relativ zu einer als Spänekasten ausgebildete Abdeckung 14 der Werkzeugmaschine 10 befinden kann und dementsprechend zwischen diesen Positionen hin- und her bewegbar ist. Dabei bezeichnen die in der Figur 1 dargestellten Positionen des Bearbeitungswerkzeugs 12(A) und 12(B) die beiden Extrempositionen, das heißt eine erste Position 12(A) mit maximaler Bearbeitungshöhe und eine zweite Position 12(B) mit minimaler Bearbeitungshöhe. Unabhängig von seiner Position rotiert das Bearbeitungswerkzeug 12 um eine Drehachse 16 (vgl. Figur 2B), wobei diese in der Figur 1 in Abhängigkeit von der jeweiligen Bearbeitungshöhe als Drehachse 16(A) und 16(B) bezeichnet ist.

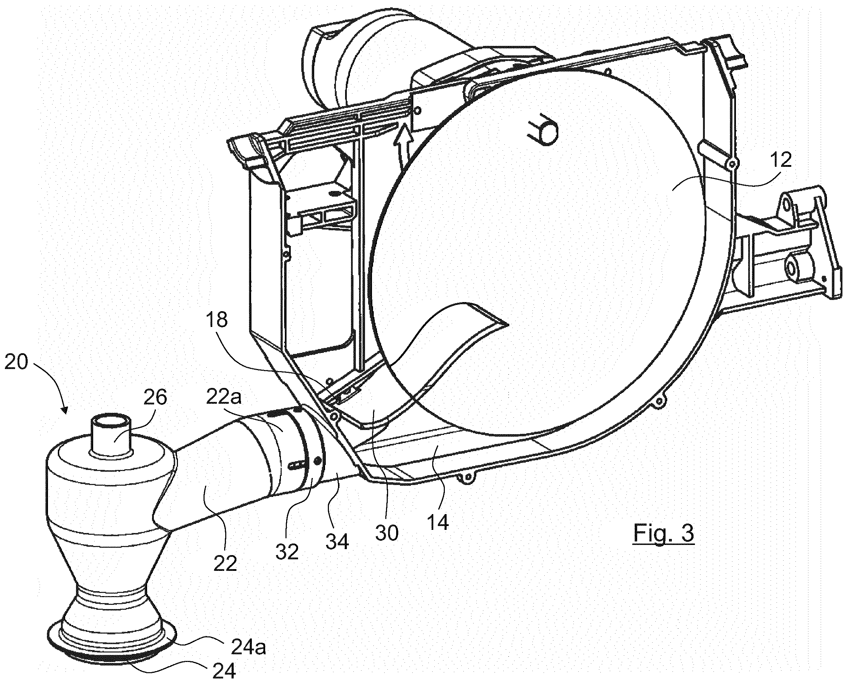

Im Inneren der als Spänekasten ausgebildeten Abdeckung 14 befinden sich Befestigungsmittel 18 zur klemmenden Befestigung eines Spanleitelements 30, auf die in Zusammenhang mit der Figur 2B und der Figur 3 noch näher eingegangen wird. Weiterhin ist mit der Abdeckung 14 verbundene eine Staubsammelvorrichtung 20 verbunden, die ebenfalls unter Bezugnahme auf die nachfolgenden Figuren näher beschrieben wird. Die Abdeckung 14 weist zur Verbindung einen Auslassstutzen 34 auf, durch den Luft zusammen mit Staub- und Spanpartikeln aus dem durch die Abdeckung 14 begrenzten Bearbeitungsraum nach außen bzw. in die Staubsammelvorrichtung 20 abgegeben werden kann. Die Staubsammelvorrichtung 20 ist insbesondere in der Figur 2B detaillierter dargestellt und wird daher unter Bezugnahme auf diese Figur nachfolgend näher beschrieben:
Die Staubsammelvorrichtung 20 umfasst in der dargestellten Ausführungsform eine als Gegenstromzyklon ausgebildete Zykloneinheit 28, die mit einem Einlassstutzen 22, einem Staubauslass 24 und einem hierzu auf der gegenüberliegenden Seite der Staubsammelvorrichtung 20 angeordneten Luftauslass 26 verbunden ist, der durch ein Tauchrohr gebildet ist. Im Inneren der Staubsammelvorrichtung 20 ist die Zykloneinheit 28 vorgesehen, die einen ersten zylinderförmigen Abschnitt 28a und einen hieran angeschlossenen kegelförmigen Abschnitt 28b aufweist. Zusätzlich können im Inneren der Zykloneinheit 28 selbstverständlich auch Leiterbleche zur Verstärkung des bekannten Abscheidungseffekts vorgesehen sein. Die Zykloneinheit ist konzentrisch innerhalb der Staubsammelvorrichtung 20 mit den Auslässen 24 und 26 angeordnet und erstreckt sich entlang einer Mittellängsachse M, welche zugleich die Mittellängsachse des Tauchrohrs 26 und des Staubauslasses 24 bildet. Im Bereich des Staubauslass 24 ist ferner in der Figur 2B eine Befestigungsanordnung 24a zur Befestigung eines Sammelbehälters (nicht dargestellt) angedeutet.

In der Figur 2A ist eine Rückansicht der erfindungsgemäßen Werkzeugmaschine 10 gezeigt, die im Wesentlichen in einem montierten Zustand die Anordnung der Staubsammelvorrichtung 20 relativ zu dem Bearbeitungswerkzeug 12, nämlich mit Versatz V, darstellen und die nachfolgende Schnittdarstellung in der Figur 2B erläutern soll. Der Versatz V der Mittellängsachse M (vgl. Figur 2A) der Staubsammelvorrichtung 20 zu der Mittelebene ME des Bearbeitungswerkzeugs 12 (vgl. Figur 2A) ergibt sich daraus, dass der Einlassstutzen 22 nicht zentral, sondern dezentral bezogen auf die Mittellängsachse M in den zylinderförmigen Abschnitt 28a mündet, um der einströmenden Luft im Inneren der Zykloneinheit 28 einen entsprechenden Drall und eine Drehrichtung zu geben.

Die Abdeckung 14 umfasst ferner einen Auslassstutzen 34, an dem der Einlassstutzen 22 der Staubsammelvorrichtung 20 angebracht ist. Um eine Justierung der Zykloneinheit 28 zu ermöglichen, das heißt eine optimale Ausrichtung, bei der die Mittellängsachse M der Zykloneinheit 28 vertikal ausgerichtet ist, ist ein Freilauf 32 vorgesehen, über den sich die Staubsammelvorrichtung 20 relativ zu dem Auslassstutzen 34 verdrehen kann. Die Drehachse fällt in der gezeigten Ausführungsform im Wesentlichen mit der Längsachse (nicht dargestellt) des Auslassstutzens 34 zusammen.

Bei der gezeigten Justiermöglichkeit mit einem Freilauf 32 kann sich die Staubsammelvorrichtung 20 schwerkraftbedingt selbst ausrichten, indem der Freilauf eine reibungsarme Drehlagerung bereitstellt. Bei einem Verschwenken der Abdeckung 14 richtet sich folglich die Staubsammelvorrichtung selbst aus. Alternative Ausgestaltungsmöglichkeiten zur Ausrichtung bzw. Justierung der Position der Staubsammelvorrichtung 20 relativ zu der Abdeckung 14 bzw. dem Bearbeitungswerkzeug 12 sind selbstverständlich ebenfalls denkbar.

Im Inneren der Abdeckung 14 ist ferner das Spanleitelement 30 angeordnet und zumindest einseitig an dieser befestigt. Alternativ ist selbstverständlich auch denkbar, diese an anderen Komponenten der Werkzeugmaschine anzubringen. Das Spanleitelement 30 ist in der gezeigten Ausführungsform kurvenförmig mit einer (im Querschnitt betrachtet) leichten S-Kurve ausgebildet und angeordnet. Weiterhin ist das Spanleitelement in der gezeigten Ausführungsform aus einem gummiartigen Werkstoff hergestellt, der in unmittelbarem Kontakt mit dem Bearbeitungswerkzeug 12 stehen kann, ohne dieses zu beschädigen. Hierdurch wird zum einen eine hohe Lebensdauer des Bearbeitungswerkzeugs 12 sichergestellt und zum anderen eine einfache Montage des Spanleitelements 30 ermöglicht. Dies ist nicht nur bei der Erstmontage der Werkzeugmaschine, sondern gegebenenfalls auch bei einem Austausch eines überalterten Spanleitelements von Vorteil.

Nachfolgend wird die Montage des Spanleitelements kurz beschrieben: So wird das gummiartige Spanleitelement zwischen die vorgesehenen Befestigungselemente 18 geklemmt, die in ihrer Ausrichtung und Anordnung derart innerhalb der Abdeckung 14 angebracht sind, dass sie zum einen in einem eingebauten Zustand des Spanleitelements 30 dieses in der gezeigten S-kurvenförmige Gestalt halten, und zum anderen, dass eine klemmende Befestigung des Spanleitelements 30 erreicht wird. Das Spanleitelement 30 ist in seiner Ausgangsform im Wesentlichen eben und erhält in der gezeigten Ausführungsform seine spezifische kurvenförmige Form (im Querschnitt betrachtet) erst durch das Einspannen zwischen die Befestigungselemente 18. Somit wird eine vergleichsweise einfache Anordnung des Spanleitelements 30 innerhalb der als Spänekasten ausgebildeten Abdeckung 14 ermöglicht.

In einem nächsten Schritt taucht das Bearbeitungswerkzeug 12 in der dargestellten Ausführungsform erstmalig von seiner maximalen Bearbeitungshöhe in Richtung zu dem Werkstück ab und durchschneidet (rotierend) das eingespannte Spanleitelement 30. Dadurch, dass der Schlitz für das Bearbeitungswerkzeug 12 nicht bereits zuvor im Spanleitelement 30 angebracht war, sondern von dem Bearbeitungswerkzeug 12 selbst hergestellt wird, wird wiederum eine vereinfachte Herstellung des Spanleitelements 30 und eine gleichsam einfache Montage (ohne notwendige zusätzliche Ausrichtung des Spanleitelements) ermöglicht. Weiterhin wird hierdurch jedoch auch eine besonders dichte Anlage des Spanleitelements 30 beidseitig der Stirnflächen des Bearbeitungswerkzeugs 12 ermöglicht.

Das Spanleitelement 30 leitet im Betrieb die Flugbahn der Späne entscheidend ab und bündelt diese im Bereich des gewollten Späneaustritts, das heißt im Bereich des Auslassstutzens 34. Durch die dichte Anlage an dem Bearbeitungswerkzeug 12 wird die Spänestreuung in Drehrichtung des Bearbeitungswerkzeugs 12 nach oben hin nachhaltig minimiert.

Durch die Kombination eines Zyklonabscheiders mit dem erfindungsgemäßen Spanleitelement 30 wird eine besonders effiziente passive Staubabscheidung bereitgestellt, die zum einen den Verzicht auf ein zusätzliches Staubabsauggerät und zum anderen das Arbeiten in geschlossenen Räumen ohne die damit bekannten Nachteile ermöglicht.

## Patentansprüche

1. Werkzeugmaschine (10) mit einem im wesentlichen scheibenförmigen Bearbeitungswerkzeug (12), beispielsweise eine Säge oder Schleifmaschine, wobei das scheibenförmige Bearbeitungswerkzeug (12) von einer Antriebseinheit der Werkzeugmaschine antreibbar ist und sich im angetriebenen Zustand um eine Drehachse (16) dreht, umfassend
eine Abdeckung (14) für das Bearbeitungswerkzeug (12), sowie eine Staubsammelvorrichtung (20), die mit der Abdeckung (14) verbunden und zum Sammeln und Abführen von Staub- und Spanpartikeln vorgesehen ist, welche bei der Bearbeitung mit dem Bearbeitungswerkzeug (12) anfallen, wobei die Staubsammelvorrichtung (20) einen Einlass (22), wenigstens einen Auslass (24, 26) sowie eine Zykloneinheit (28) zur Abscheidung der Staub- und Spanpartikel aufweist,
**dadurch gekennzeichnet, dass** im Bereich des Bearbeitungswerkzeugs (12) an der Abdeckung (14) wenigstens ein Spanleitelement(30) vorgesehen ist, das zumindest abschnittsweise an beiden Stirnflächen des Bearbeitungswerkzeugs (12) anzuliegen und eine Umleitung der von dem Bearbeitungswerkzeug (12) abgegebenen Staub- und Spanpartikel in Richtung zum Einlass (22) der Staubsammelvorrichtung (20) zu bewirken vermag.

2. Werkzeugmaschine (10) nach Anspruch 1,
**dadurch gekennzeichnet, dass** das Bearbeitungswerkzeug (12) für eine Einstellbarkeit der Bearbeitungshöhe relativ zu der Abdeckung (14) verstellbar ist, wobei das Spanleitelement (30) zumindest in einer minimalen Bearbeitungshöhe (12B) des Bearbeitungswerkzeugs (12) zumindest abschnittsweise an beiden Stirnflächen des Bearbeitungswerkzeugs (12) anzuliegen und eine Umleitung der von dem Bearbeitungswerkzeug (12) abgegebenen Staub- und Spanpartikel in Richtung zum Einlass (22) der Staubsammelvorrichtung (20) zu bewirken vermag.

3. Werkzeugmaschine (10) nach Anspruch 1 oder 2,
**dadurch gekennzeichnet, dass** die Zykloneinheit (28) einen Gleichstromzyklon oder einen Gegenstromzyklon umfasst.

4. Werkzeugmaschine (10) nach einem der vorhergehenden Ansprüche,
**dadurch gekennzeichnet, dass** die Staubsammelvorrichtung (20) wenigstens einen Sammelbehälter, insbesondere einen Staubsack, umfasst, der an dem wenigstens einen Auslass (24) befestigbar ist.

5. Werkzeugmaschine (10) nach einem der vorhergehenden Ansprüche,
**dadurch gekennzeichnet, dass** wenigstens die Zykloneinheit (28) mittels einer Justageeinheit relativ zu der Abdeckung (14) verstellbar angebracht ist.

6. Werkzeugmaschine (10) nach Anspruch 5,
**dadurch gekennzeichnet, dass** die Justageeinheit einen Freilauf (32) umfasst, der bewirkt, dass wenigstens die Zykloneinheit (28) schwerkaftbedingt im Wesentlichen in einer vorgegebenen Ausrichtung verbleibt, selbst wenn die verbundene Abdeckung (14) in ihrer Ausrichtung verändert, insbesondere verschwenkt wird.

7. Werkzeugmaschine(10) nach einem der vorhergehenden Ansprüche,
**dadurch gekennzeichnet, dass** das Spanleitelement (30) aus einem Elastomer- oder Kunststoffmaterial hergestellt ist.

8. Werkzeugmaschine (10) nach einem der vorhergehenden Ansprüche,
**dadurch gekennzeichnet, dass** das Spanleitelement (30) kraftschlüssig, insbesondere über Klemmung, an der Abdeckung (14) aufgenommen ist.

9. Werkzeugmaschine (10) nach einem der vorhergehenden Ansprüche,
**dadurch gekennzeichnet, dass** das Spanleitelement (30) im Querschnitt betrachtet einen kurvenförmigen Verlauf, insbesondere in der Art einer S-Kurve, aufweist.

10. Werkzeugmaschine (10) nach einem der vorhergehenden Ansprüche 2 bis 9,
**dadurch gekennzeichnet, dass** das Spanleitelement (30) derart angeordnet ist, das es in einer maximalen Bearbeitungshöhe des Bearbeitungswerkzeugs (12A) den von dem Bearbeitungswerkzeug beschriebenen Hüllkreis zumindest tangiert und in einer geringeren Bearbeitungshöhe(12B) zumindest abschnittsweise an beiden Stirnflächen des Bearbeitungswerkzeugs anzuliegen vermag.

11. Werkzeugmaschine nach einem der vorhergehenden Ansprüche,
**dadurch gekennzeichnet, dass** diese zusätzlich einen Lüfter zur Erzeugung eines Luftstroms in Richtung der Staubsammelvorrichtung aufweisen kann.

12. Werkzeugmaschine nach Anspruch 11,
**dadurch gekennzeichnet, dass** der Lüfter mit der Antriebswelle des Bearbeitungswerkzeugs verbunden und zusammen mit dieser angetrieben werden kann.

## Claims

1. A machine tool (10) with a substantially disc-shaped machining tool (12), for example a saw or grinding machine, wherein the disc-shaped machining tool (12) can be driven by a drive unit of the machine tool and rotates in the driven state about an axis of rotation (16), comprising
a cover (14) for the machining tool (12), and
a dust collecting device (20) which is connected to the cover (14) and is provided for collecting and discharging dust and chip particles which arise during machining with the machining tool (12), the dust collecting device (20) having an inlet (22), at least one outlet (24, 26) and a cyclone unit (28) for separating the dust and chip particles,
**characterized in that** at least one chip guiding element (30) is provided on the cover (14) in the region of the machining tool (12), which chip guiding element (30) is able to rest at least in sections on both end faces of the machining tool (12) and to effect a diversion of the dust and chip particles emitted by the machining tool (12) in the direction of the inlet (22) of the dust collecting device (20).

2. The machine tool (10) according to claim 1,
**characterized in that** the machining tool (12) is adjustable relative to the cover (14) for adjustability of the machining height, the chip guiding element (30) being able to abut at least in sections against both end faces of the machining tool (12) at a minimum machining height (12B) of the machining tool (12) and to effect a diversion of the dust and chip particles emitted by the machining tool (12) in the direction of the inlet (22) of the dust collecting device (20).

3. The machine tool (10) according to claim 1 or 2,
**characterized in that** the cyclone unit (28) comprises a co-flow cyclone or a counter-flow cyclone.

4. The machine tool (10) according to any one of the preceding claims,
**characterized in that** the dust collection device (20) comprises at least one collection container, in particular a dust bag, which is attachable to the at least one outlet (24).

5. The machine tool (10) according to one of the preceding claims,
**characterized in that** at least the cyclone unit (28) is adjustably mounted relative to the cover (14) by means of an adjustment unit.

6. The machine tool (10) according to claim 5,
**characterized in that** the adjustment unit comprises a freewheel (32) which causes at least the cyclone unit (28) to remain substantially in a predetermined orientation due to gravity, even if the connected cover (14) is changed in its orientation, in particular pivoted.

7. The machine tool (10) according to one of the preceding claims,
**characterized in that** the chip guiding element (30) is made of an elastomer or plastic material.

8. The machine tool (10) according to one of the preceding claims,
**characterized in that** the chip guiding element (30) is received on the cover (14) in a force-locking manner, in particular by means of clamping.

9. The machine tool (10) according to one of the preceding claims,
**characterized in that** the chip guiding element (30) has a curved course, in particular in the manner of an S-curve, when viewed in cross-section.

10. The machine tool (10) according to one of the preceding claims 2 to 9,
**characterized in that** the chip guiding element (30) is arranged in such a way that at a maximum machining height of the machining tool (12A) it is at least tangent to the enveloping circle described by the machining tool and at a lower machining height (12B) it is able to bear at least in sections against both end faces of the machining tool.

11. The machine tool according to one of the preceding claims,
**characterized in that** it may additionally comprise a fan for generating an air flow in the direction of the dust collecting device.

12. The machine tool according to claim 11,
**characterized in that** the fan can be connected to the drive shaft of the machining tool and can be driven together therewith.

## Revendications

1. Machine-outil (10) avec un outil d'usinage (12) essentiellement en forme de disque, par exemple une scie ou une meuleuse, l'outil d'usinage (12) en forme de disque pouvant être entra né par une unité d'entra nement de la machine-outil et tournant à l'état entra né autour d'un axe de rotation (16), comprenant un couvercle (14) pour l'outil d'usinage (12), et
un dispositif de collecte de poussière (20) qui est relié au couvercle (14) et est prévu pour collecter et évacuer des particules de poussière et de copeaux qui sont produites pendant l'usinage avec l'outil d'usinage (12), le dispositif de collecte de poussière (20) ayant une entrée (22), au moins une sortie (24, 26) et une unité de cyclone (28) pour séparer les particules de poussière et de copeaux,
**caractérisé en ce qu'**au moins un élément de guidage de copeaux (30) est prévu sur le couvercle (14) dans la zone de l'outil d'usinage (12), lequel élément de guidage de copeaux (30) est capable de s'appuyer au moins par sections sur les deux faces frontales de l'outil d'usinage (12) et d'effectuer une déviation des particules de poussière et de copeaux émises par l'outil d'usinage (12) en direction de l'entrée (22) du dispositif de collecte de poussière (20).

2. Machine-outil (10) selon la revendication 1,
**caractérisé en ce que** l'outil d'usinage (12) est ajustable par rapport au couvercle (14) pour l'ajustement de la hauteur d'usinage, dans lequel l'élément de guidage de copeaux (30) est adapté pour venir en butée contre les deux faces d'extrémité de l'outil d'usinage (12) au moins à une hauteur d'usinage minimale (12B) de l'outil d'usinage (12) au moins par sections et pour effectuer une déviation des particules de poussière et de copeaux déchargées de l'outil d'usinage (12) dans la direction de l'entrée (22) du dispositif de collecte de poussière (20).

3. Machine-outil (10) selon la revendication 1 ou 2,
**caractérisé en ce que** l'unité de cyclone (28) comprend un cyclone à co-courant ou un cyclone à contre-courant.

4. Machine-outil (10) selon l'une quelconque des revendications précédentes,
**caractérisé en ce que** le dispositif de collecte de poussière (20) comprend au moins un récipient de collecte, en particulier un sac à poussière, qui peut être fixé à la au moins une sortie (24).

5. Machine-outil (10) selon l'une quelconque des revendications précédentes,
**caractérisé en ce qu'**au moins l'unité de cyclone (28) est montée de manière réglable par rapport au couvercle (14) au moyen d'une unité de réglage.

6. Machine-outil (10) selon la revendication 5,
**caractérisé en ce que** l'unité de réglage comprend une roue libre (32) qui fait qu'au moins l'unité de cyclone (28) reste sensiblement dans une orientation prédéterminée due à la gravité, même si le couvercle connecté (14) est modifié dans son orientation, en particulier pivoté.

7. Machine-outil (10) selon l'une des revendications précédentes,
**caractérisé en ce que** l'élément de guidage de copeaux (30) est constitué d'un matériau élastomère ou plastique.

8. Machine-outil (10) selon l'une quelconque des revendications précédentes,
**caractérisé en ce que** l'élément de guidage de puce (30) est reçu sur le couvercle (14) par une liaison par force, en particulier par serrage.

9. Machine-outil (10) selon l'une des revendications précédentes,
**caractérisé en ce que** l'élément de guidage de copeaux (30) présente un tracé curviligne en section transversale, en particulier à la manière d'une courbe en S.

10. Machine-outil (10) selon l'une quelconque des revendications précédentes 2 à 9,
**caractérisé en ce que** l'élément de guidage de copeaux (30) est disposé de telle sorte qu'à une hauteur d'usinage maximale de l'outil d'usinage (12A), il est au moins tangent au cercle enveloppant décrit par l'outil d'usinage et qu'à une hauteur d'usinage inférieure (12B), il peut s'appuyer au moins par sections sur les deux faces frontales de l'outil d'usinage.

11. Machine-outil selon l'une des revendications précédentes,
**caractérisé en ce qu'**il peut comprendre en outre un ventilateur pour générer un flux d'air dans la direction du dispositif de collecte de poussière.

12. Machine-outil selon la revendication 11,
**caractérisé en ce que** le ventilateur peut être relié à l'arbre d'entraînement de l'outil d'usinage et peut être entraîné avec celui-ci.
